# EUROPEAN PATENT APPLICATION

(11) **EP 4 012 536 A1**
(43) Date of publication of application: **15.06.2022**
(21) Application number: 20213333.6
(22) Date of filing: 11.12.2020
(51) Int. Cl.: G06F 3/01, G06K 9/00, G06T 7/00

(54) **FILE FORMAT WITH VARIABLE DATA**

(71) Applicant: Koninklijke Philips N.V., 5656 AG Eindhoven (NL)
(72) Inventor: VAREKAMP, Christiaan, 5656 AE Eindhoven (NL)
(74) Representative: Philips Intellectual Property & Standards

(57) **Abstract**

A method for storing data representative of virtual objects on a computer storage system. The method comprises storing constant data corresponding to physical properties of the virtual objects which will remain constant when the data is read. The constant data comprises one or more constant elements representative of physical properties of one or more of the virtual objects. The method also comprises storing variable data corresponding to physical properties of the virtual objects which are uncertain at the time of storing the data. The variable data comprises one or more variable elements representative of uncertain physical properties of one or more of the virtual objects and wherein each variable element comprises a range of values and a probability function for the range of values.

## Description

### FIELD OF THE INVENTION

The invention relates to the field of storing data representative of virtual objects on a computer storage system. The invention also relates to methods for modifying and displaying such data.

### BACKGROUND OF THE INVENTION

A file format is a standard way that information is encoded for storage in a computer file. The file format specifies how bits are used to encode information in a digital storage medium.

Many file formats exist today. Example 3D file formats are: OBJ, STL, FBX, COLLADE and glTF. These file formats are typically used to export a 3D scene description from one computer program such that it can be read and rendered by another computer program. Authoring tools such as Blender and Unity can read and write many different 3D graphics formats. Graphics file formats typically support the representation of 3D geometry, physics effects (light sources), shading effects, morphing and animation.

The field of 3D computer vision tries to infer object geometry, physical properties and semantic information from one or more camera images. Examples are depth estimation from stereo camera images via disparity estimation and face detection via a deep neural network with example images.

It is desirable for a file format to be interpreted and rendered by the receiving computer program in as efficient manner as possible.

### SUMMARY OF THE INVENTION

The invention is defined by the claims.

According to examples in accordance with an aspect of the invention, there is provided a method for storing data representative of virtual objects on a computer storage system, the method comprising:
storing constant data corresponding to physical properties of the virtual objects which will remain constant when the data is read, wherein the constant data comprises one or more constant elements representative of physical properties of one or more of the virtual obj ects; and
storing variable data corresponding to physical properties of the virtual objects which are uncertain at the time of storing the data, wherein the variable data comprises one or more variable elements representative of uncertain physical properties of one or more of the virtual objects and wherein each variable element comprises a range of values and a probability function for the range of values.

Representations of virtual objects in computer storage systems typically rely on the designer of the objects giving the object physical properties such as geometric shape, color, texture etc. These physical properties are represented differently depending on the file format in which the data is stored. For example, in a given format, the color of an object can be defined by a number between 0 and 1 for each of the colors green, red and blue. Thus, in this example, the color of the object is represented by three numbers.

If the color of the object is not known at the time of storing the data, the object would be stored without a color. However, in many cases, the designer may have an inclination of what the colors may be.

In a simplified example, the designer may want to design a virtual tree with a brown tree body and leaves which represents the current time of year. The leaves of trees are green in spring and summer and brown in autumn. The color of the leaves could then be stored as [green, brown] and, based on the time of year, the designer could change the color of the leaves.

In the above example, the color of the tree body, the shape of the tree body and the shape of the leaves are constant elements in the constant data, as the designer does not wish to change these properties regardless of the time of year. The color of the leaves is, however, a variable element in the variable data. The range of values for the color is green or brown and a conditional probability function could be set by coupling the data to a calendar. Additionally, the number of leaves could also be a variable element (e.g. less leaves in winter) and thus the color of the leaves and the number of leaves would be the variable elements in the variable data. The probability function could also be based on more than one conditional probability density functions (e.g. temperature outside and calendar).

The range of values and the probability function gives the reader of the data prior knowledge of the object and allows for quicker decisions. In the example above, a human was the reader of the data and could decide on the real color of the leaves based on their own observation. However, in most cases, the reader of the data will be a computer program. Prior knowledge given to the computer program can greatly improve efficiency in deciding which color the leaves are. For example, the computer program could use information from a sensor to decide whether the color is green or brown instead of measuring the real color of the leaves.

With a so called "uninformative prior" on the leaf color, but an observed low air temperature outside (unlikely in summer) an a posteriori estimator would determine that the leaves are actually brown (e.g. using Bayes' Theorem and a likelihood function that relates temperature to leaf color).

Thus, this method of storing data allows a future reader of the data to adapt the variable data quickly and efficiently to real values.

The range of values may be set by a user. Alternatively, the range of values may be the maximum possible range within the scene or even a random variable in an infinite domain (e.g. [-inf, inf]). The range of values may thus be a defined limited range or it may be an infinite range. The explicit storing of the range of values (as well as the probability function) is of particular interest in order to make it simple and intuitive to change in the future.

The data representative of objects may correspond to a 3D scene description.

The probability function for a variable element may be one or more of:
a Gaussian distribution;
a Poisson distribution;
a Delta function;
a discrete probability distribution;
a continuous probability distribution; or
a conditional probability distribution.

The probability function used on a particular variable element might depend on the physical property which is represented by the variable element and/or the nature of the physical property. For the following example, the variable element will represent the location of an object.

Imagine a finite plane with a virtual object located somewhere on the plane. The location of the object on the plane could be random. In this case, the range of values for the location would be all of the plane and the probability function would give an equal probability of landing anywhere on the plane. Alternatively, the location of the object could be more likely to be in a particular point on the plane. In this case, a Gaussian distribution with the mean at the particular point could be used as the probability function (the standard deviation would then depend on how close the object "prefers" to be to the mean, but is unimportant for the sake of the example).

In another example, the object may only be located at two particular points on the plane. In this case, the probability function could be a sum of two Delta functions for the two particular points.

Another example is the position of the two goal keepers during a soccer match. These positions are likely close to the goal and less likely to be in the center of the field. Such information can potentially help in computer vision tasks since it allows the injection of context into the file format.

The range of values may be based on a user-defined range for each particular variable element and wherein the probability function may also be based on a user-defined function for each particular variable.

The range of values can be chosen by the user. In some cases, the range of values may be broad if a particular physical property is fairly unknown (e.g. number of people on a particular street). However, in other cases, the range of values may be small (e.g. the previous example with the color of the leaves). The range of values could also be either a continuous range or a discrete range.

Similarly, a probability function can be chosen by the user for a physical property based on the nature of the physical property.

The invention also provides a method for controlling a sensor system based on the data stored according to the method for storing data representative of virtual objects on a computer storage system, the method comprising:
controlling the sensor system to search for real objects corresponding to the virtual objects which are represented in the variable data based on the range of values and/or probability functions of the variable elements in the variable data; and
obtaining sensor data from the sensor system representative of the physical properties of the real objects which correspond to the variable elements in the variable data.

The sensor system can be configured to search for real objects which correspond to the virtual objects. For example, in a sports game, the sensor system may search for the players on the field. The sports field could be constant data and, thus, the sensor system does not have to measure the physical properties of the field. The number of players and the color (i.e. team) of the players could be variable elements of the variable data and thus the sensor system could be configured to look for these variable elements. The range of values and the probability functions of the variable elements give the sensor system a "starting point" of where to look for the players and/or what colors to look for on the players.

The sensor system then only has to obtain sensor data for the physical properties which correspond to variable elements and can ignore any data on the constant data. Additionally, the sensor system has some prior knowledge on what to "look for", and thus obtaining the sensor data is quicker and more efficient.

The invention also provides a method for displaying the data stored according to the method for storing data representative of virtual objects on a computer storage system, the method comprising:
controlling a sensor system according to claim 5 to obtain sensor data;
converting one or more variable elements to temporary elements based on the corresponding sensor data for each variable element, wherein the temporary elements are known physical properties at a particular point in time; and
displaying the virtual objects based on the constant elements and the temporary elements of the data.

Once sensor data is obtained for the variable elements, they can be changed to temporary elements. For example, if the color of a virtual object is red or blue [red, blue] and the sensor system detects the real object (corresponding to the virtual object) to be red, then the variable element representing color is temporarily changed to a temporary element with the value [red]. The temporary element is then displayed alongside the constant elements of the data.

The sensor system may be configured to update sensor data periodically and the steps of the method for displaying the data are repeated each time the sensor data is updated.

For example, the sensor system could be a video camera obtaining video of the location of a real object. Each frame of the video could then be used to update the location of the virtual object. Alternatively, the location of the real object could be obtained once a second (or any other arbitrary time period) and the virtual object updated accordingly.

The range of values and/or the probability distribution of a first variable element may be at least partly based on one or more of:
the previous values of the first variable element;
the values of other variable elements; or
the previous values of other variable elements.

In some cases any particular value of a variable element may be dependent on the previous values. For example, the location of an object at a particular time is likely dependent on the location of the object a second prior.

Alternatively, the location of an object might depend on other physical properties of the same object (e.g. size, orientation etc.) or on the physical properties of other objects. For example, if a group of objects is typically found together, it is likely to find the any one of the objects in the group of objects near the other objects.

The sensor data may comprise one or more of:
visual sensor data;
infrared sensor data;
microwave sensor data;
ultrasound sensor data;
audio sensor data;
position sensor data;
accelerometer sensor data; or
global positioning system data.

The invention also provides a method for modifying the data representative of virtual objects stored according to the method defined above (for storing data representative of virtual objects on a computer storage system), the method comprising:
obtaining a historic sensor data log from a sensor system comprising the physical properties, and respective changes over time, of real objects which correspond to variable elements of the data representative of virtual objects; and
modifying the range of values and/or probability functions of the variable elements based on historic data of the range of values and/or probability functions and the corresponding historic sensor data logs.

The historic data from the sensor system (historic sensor data log) can provide valuable information on what the range of values and/or the probability function should be. For example, the probability function of a variable element may indicate that any particular value is equally likely. However, the sensor system may observe that the variable element has some values which it "prefers". Thus, the probability function could be adapted to have a Gaussian distribution, where the mean and standard deviation is derived from the historic sensor data log.

Modifying the range of values and/or probability functions may be based on inputting the historic data and the corresponding historic sensor data logs to a machine learning algorithm trained to identify patterns between the historic data and historic sensor data logs and output a range of values and/or a probability functions for the corresponding variable elements.

The method may further comprise modifying the range of values and/or the probability function based on calculating the maximum a posteriori estimate of the historic sensor data log.

The invention also provides a computer program product comprising computer program code means which, when executed on a computing device having a processing system, cause the processing system to perform all of the steps of the method defined above (for storing data representative of virtual objects on a computer storage system).

The invention also provides a processor configured to perform all of the steps of the method defined above (for storing data representative of virtual objects on a computer storage system).

The invention also provides a system for displaying virtual objects, the system comprising:
the processor;
a computer storage system configured to store the data representative of virtual obj ects;
a sensor system for obtaining sensor data representative of real objects; and
a display for displaying the virtual objects.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 shows an example 3D scene;
Fig. 2 shows an illustration of a file format that includes uncertainty information;
Fig. 3 shows a visualization of the probability function on the field for a virtual player; and
Fig. 4 shows two different camera views of a real scene and the corresponding virtual scene.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a method for storing data representative of virtual objects on a computer storage system. The method comprises storing constant data corresponding to physical properties of the virtual objects which will remain constant when the data is read. The constant data comprises one or more constant elements representative of physical properties of one or more of the virtual objects. The method also comprises storing variable data corresponding to physical properties of the virtual objects which are uncertain at the time of storing the data. The variable data comprises one or more variable elements representative of uncertain physical properties of one or more of the virtual objects and wherein each variable element comprises a range of values and a probability function for the range of values.

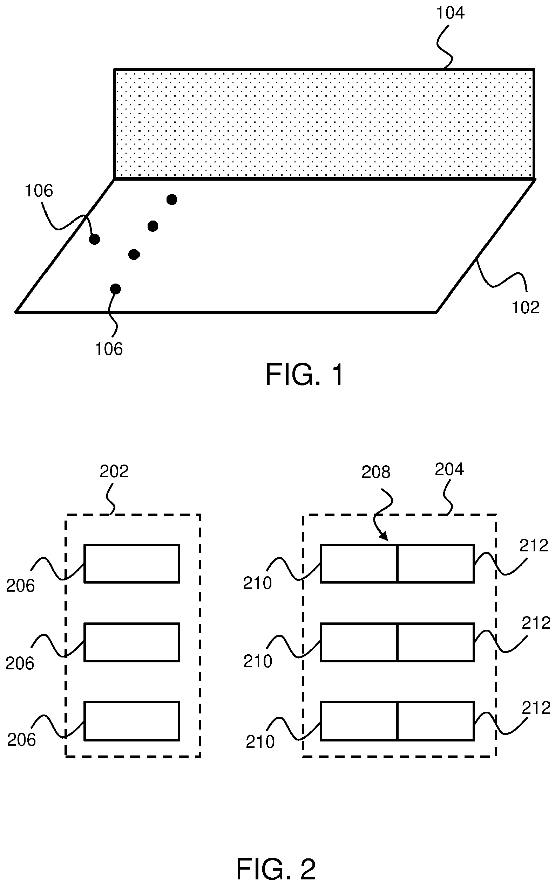

Fig. 1 shows an example 3D scene. The scene corresponds to a virtual soccer field containing a field 102, a background 104 and five players 106. Current 3D file formats cannot express the uncertainty about the 3D scene that will be imaged by a given (multi-camera setup (e.g. the movement of the players 106 around the field 102). Current 3D file formats only specify one possible rendering of a static scene, optionally consisting of moving (animation) parts.

The inventors realized that a 3D file format that could express uncertainty about a 3D scene would be useful as it could couple prior knowledge to measured sensor data to adapt the 3D scene to real-time measurements done by cameras or other sensors. Thus, the invention relates to methods for storing, modifying and displaying such a file format.

Fig. 2 shows an illustration of a file format that includes uncertainty information. The file format includes deterministic data 202 (i.e. constant data) containing constant elements 206 which are certain to the user who stores the data. For example, the size of the field 102 illustrated in Fig. 1 may be a constant element 206 as it is unlikely the area of the field 102 will be measured as being different to the current area.

The file format also contains variable data 204 which contains the uncertainty of the 3D scene. Each variable element 208 in the variable data 204 contains a range of values 210 as well as a probability function 212 which corresponds to the likelihood of the values in the range 210.

The file format containing the constant data 202 and the variable data 204 for a player 106 can, for example, be described in the following pseudo-code:

```
                <player>
                <location>
                <x>
                      <range> -30, 30 </range>
                      <prob> random </prob>
                </x>
                <y>
                      <range> 0, 100 </range>
                      <prob> random </prob>
                </y>
                <z> 0.4 </z>
                </location>
                </player>
```

The file above uses a custom XML format to describe the location of a virtual player 106 on the soccer scene of Fig. 1. The z location of the virtual player 106 remains constant at 0.4 as it seems unlikely that the z location of a player 106 will change on the field 102 (ignoring jumping). However, the x and y locations of the virtual player 106 will change as they move around the field 102. Thus, a range 210 of possible movement is defined for each coordinate axis and a probability function 212 is given. In this example, the x and y axes are variable elements 208 with the corresponding range 210 and probability function 212 and the z location is a constant element 206.

In this case, the probability function 212 is given as "random" for both the x and y axes. This may be, for example, a starting point for variable elements 208. It is possible that some players on the field 102 have a fairly random location throughout the field 102 (e.g. midfielders tend to move throughout the whole field 102) whilst other players have a higher probability in certain places (e.g. the goalkeeper is much more likely to be found near the goal). The probability function 212 can then be adapted for the different players throughout the game (or from historic data).

Additionally, the number of virtual players 106 on the field 102 could also be specified:

```
                <count>
                      <range> 0, 22 </range>
                      <prob> function_1 </prob>
                </count>
```

By specifying a variable number of virtual players 106 as in the range 210 [0,22] with a probability function 212 "funciton_1", a computer program reading the data would be told that this information is uncertain. The arbitrary probability function 212 "funciton_1" may be constantly adjusted based on the number of real players. For example, there might be a high probability of having 22 players on the field 102 at the start of a match. However, based on any one of the real players receiving a red card, funciton_1 may change to have a higher probability for 21 players. Thus, the probability function 212 "funciton_1" could be coupled to a sensor (e.g. camera) which can sense the use of a red card and adapt accordingly.

Other deterministic (constant) elements 206 and variable (e.g. stochastic) elements 208 could also be defined for a soccer field. For instance, the location of the field 102 may be deterministic, but the plane may have a stochastic rotation between -95 and -85 degree around the x-axis and between -5 and 5 degree around the z-axis.

Note that the pseudo-code uses a custom XML format to describe the scene. However, the concept can be added to the specifications of most existing 3D file formats. An application, such as for instance Blender or Unity, can just choose to ignore the variable data 204 of the 3D graphics file and just render/animate the scene as is usually done from the constant data 202.

The proposed file format is relevant for new applications. Consider for instance the situation that each player in a (real) live sports game wears a position (e.g. GPS) sensor. During the live sports game, viewers of the match can receive a graphics rendering of the sports game that has the graphics appearance (geometry, texture, etc.) as specified by the 3D file format but the positions of the virtual players 106 are adapted to the measured positions of the corresponding real players on the playing field 102. Viewers of the match are thus looking at a mix of artificial graphics renderings of virtual players 106 but with their real live positions.

Like humans, computers also benefit from prior-knowledge of the scene, even if this knowledge is very uncertain. As an example, the knowledge that cameras are pointing along a horizontal field 102 at players is currently used to estimate the depth of pixels in multiple camera images. Without such prior assumptions, the depth estimation results can contain many errors.

The installation of multiple machine vision cameras around a stadium can add a live texture to the virtual players 106 on the player field 102. This is a computer vision problem that would normally require machine learning based person detection and pose estimation. However, the a-priori variable data 204 in the 3D graphics file can anticipate the expected color of the clothing (socks, shirts, etc.) of real players. This can help the computer vision application to find the real player and texture it correctly on the virtual player 106 using the camera image data.

Sensor data can adjust the variable elements 208 while the deterministic elements 206 are rendered as they were initially stored. It is therefore possible to deterministically set the graphics appearance of the soccer field, stadium and light sources but leave the virtual players 106 flexible to adapt to the sensor data with a single 3D file format description.

Based on the file format with uncertain data, a computer vision search algorithm would therefore know that it does not need to search the plane position but only its orientation, the specified rotations and in the specified intervals. Additionally, based on the probability function 212, the algorithm could begin searching on the interval with the highest probability. The probability function 212 could then be updated based on historic data and/or based on the current data.

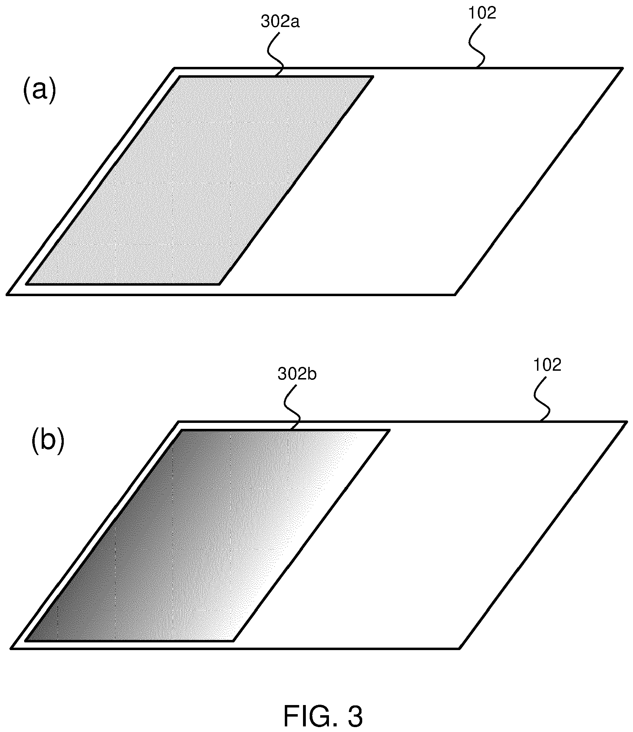

Fig. 3 shows a visualization of the probability function 212 on the field 102 for a virtual player 106. In this case, the virtual player 106 corresponds to a goalkeeper. Fig. 3 (a) shows a first area 302a of equal probability for the goalkeeper. Fig. 3 (b) shows a second area 302b with a gradient of probability. The size of the areas 302a and 302b corresponds to the range 210 of locations for the goalkeeper and the shades of grey correspond to a probability, where the darker the shade grey at any particular point corresponds to a higher the probability of finding the goalkeeper in the particular point.

At the start of a match, the location of the goalkeeper may be unknown, thus the probability can be defined as random (within the range 210) as shown in Fig. 3 (a). However, as the match is played, the goalkeeper may be found most often at the back of the field 102 near the goal with a gradually decreasing probability the further the distance from the goal. This is can be quantified as a probability function 212 which corresponds to the area 302b. Thus, the probability function 212 may evolve throughout the match.

Alternatively, the probability function 212 can use historic data of the same player (or the same types of players) to anticipate a probability function 212 before the match. The probability function 212 could also be conditional on the previous location of the virtual player 106, as it is likely the real player will be found near their location in the previous frame(s).

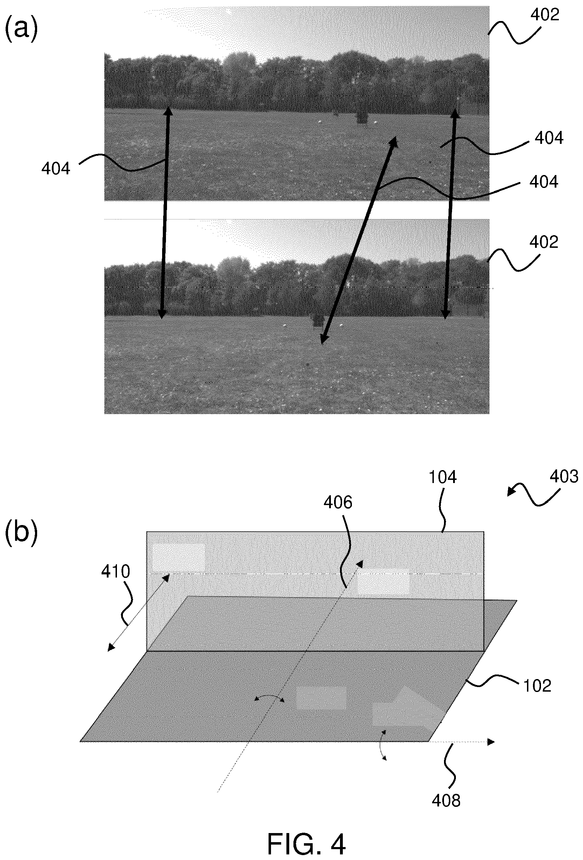

Fig. 4 shows two different camera views 402 of a real scene and the corresponding virtual scene 403. A current computer vision search algorithm can use the variable elements 208 in the 3D graphics file to fit a horizontal plane (i.e. field) 102 and a vertical background 104 based on at least the two camera views 402.

For a fixed number of iterations, the search algorithm evaluates small updates to the position and rotation of geometric objects and in addition a pseudo-random value in the specified interval. The search could starts in the middle of interval. This approach is applicable for both geometric parameters (position, orientation) and for color/texture parameters.

After each proposed parameter change, an error metric is calculated. The scene is first rendered to each viewpoint. The result is a predicted image and depth map based on the graphics model. Given the depth maps in each view, an error metric is calculated via the absolute difference in the different colors between views thereby using disparity vectors that correspond to the depth maps. The arrows 404 in Fig. 4 are example corresponding pixels as dictated by the model state between the camera views 402. The error minimization can be run in real-time on, for example, GPU (e.g. for at least 20 FPS output video).

A total error is calculated for a given parameter setting (position and orientation of the plane) by summing the color difference of corresponding pixels (from arrows 404) in both views. The plane position and orientation determines a depth model in each camera view which in turn determines a disparity vector field between the two views. The disparity vector field is used to calculate color differences between views and after summing of the absolute color differences over all pixels a single error results. This single (summed) total error is minimized by iteratively changing the plane parameters from an initial starting setting and thereby always accepting proposal changes that decrease the error. For instance, Powell's direction set method could be used.

The rotation of the field 102 around the x axis 408 and around the y axis 406 in the virtual scene 403 can be estimated from the camera views 402. A range 210 and probability function 212 defined in the file format for the field 102 give the computer vision algorithm prior knowledge of which rotations to "look for". Similarly, the location of the background 104 on the field 102 (shown by arrow 410) can also change. For example, the angle of the background 104 to the field 102 may be fixed (e.g. 90 degrees) and thus would be a constant element 206 and the location of the background 104 on the field 102 would be a variable element 208.

There are various probability functions 212 which can be used, and it can be useful to specify certain probability density functions. For instance:

```
                <x>
                <Gaussian>100.0, 10.0</Gaussian>
                </x>
```

This pseudo-code denotes that the x-coordinate of the geometric primitive follows a Gaussian distribution with mean of 100.0m and standard deviation of 10.0m. For the number of virtual objects (e.g. virtual players 106) a Poisson distribution could be specified. To make the format specification consistent by using the variable data 204 format for all of the data, a Delta function could be used to define the constant elements 206 that are essentially deterministic.

The use of variable elements 208 also extends to textures, light maps, shadow maps and other elements that are typically part of 3D graphics file formats. The parameters of the probability functions 212 can then be specified as maps instead of scalar numbers. A combination is also possible, i.e., the mean value of a Gaussian distribution can be represented by a 2D map while the standard deviation may be represented by a scalar number.

The 3D file format could also specify conditional probability density functions. This is relevant for animation where for example, the position of the foot of a virtual player 106 at a given moment in time can then conditionally depend on the foot position earlier in time. Probability density functions can also be specified as discrete distribution via histograms.

Machine learning algorithms may be used to fit the parameters of the distributions based on sensor data and output a better suited range 210 and/or probability function 212 for a next live event. Bayes' theorem can also be used to calculate the maximum a posteriori (MAP) estimate of the scene model given the sensor data. This estimate can then be written to file.

A Monte-Carlo simulation could be used to sample from the specified distribution. For example, Markov Chain Monte Carlo (MCMC) can be used as part of a computer vision algorithm to search, for example, for the maximum a posteriori estimate of the location of a real player.

The invention is not limited to 3D scenes and could also be used on a 2D scene (or other dimensions). For example, the soccer field previously described may only be a 2D scene with the virtual players 106 as points on a 2D field.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

## Claims

1. A method for storing data representative of virtual objects (102, 104, 106) on a computer storage system, the method comprising:
storing constant data (202) corresponding to physical properties of the virtual objects (102, 104, 106) which will remain constant when the data is read, wherein the constant data (202) comprises one or more constant elements (206) representative of physical properties of one or more of the virtual objects (102, 104, 106); and
storing variable data (204) corresponding to physical properties of the virtual objects (102, 104, 106) which are uncertain at the time of storing the data, wherein the variable data (204) comprises one or more variable elements (208) representative of uncertain physical properties of one or more of the virtual objects (102, 104, 106) and wherein each variable element (208) comprises a range of values (210) and a probability function (212) for the range of values (210).

2. The method of claim 1, wherein the data representative of virtual objects (102, 104, 106) corresponds to a 3D scene description.

3. The method of any one of claims 1 or 2, wherein the probability function (212) for a variable element (208) is one or more of:
a Gaussian distribution;
a Poisson distribution;
a Delta function;
a discrete probability distribution;
a continuous probability distribution; or
a conditional probability distribution.

4. The method of any one of claims 1 to 3, wherein the range of values (210) is based on a user-defined range for each particular variable element (208) and wherein the probability function (212) is also based on a user-defined function for each particular variable element (208).

5. A method for controlling a sensor system based on the data stored according to the method of any one of claims 1 to 4, the method comprising:
controlling the sensor system to search for real objects corresponding to the virtual objects (102, 104, 106) which are represented in the variable data (204) based on the range of values (210) and/or probability functions (212) of the variable elements (208) in the variable data (204); and
obtaining sensor data from the sensor system representative of the physical properties of the real objects which correspond to the variable elements (208) in the variable data (204).

6. A method for displaying the data stored according to the method of any one of claims 1 to 4, the method comprising:
controlling a sensor system according to claim 5 to obtain sensor data;
converting one or more variable elements (208) to temporary elements based on the corresponding sensor data for each variable element (208), wherein the temporary elements are known physical properties at a particular point in time; and
displaying the virtual objects (102, 104, 106) based on the constant elements (206) and the temporary elements of the data.

7. The method of claim 6, wherein the sensor system is configured to update sensor data periodically and the steps of claim 6 are repeated each time the sensor data is updated.

8. The method of claim 7, wherein the range of values (210) and/or the probability distribution (212) of a first variable element is at least partly based on one or more of:
the previous values of the first variable element;
the values of other variable elements; or
the previous values of other variable elements.

9. The method of any one of claims 5 to 8, wherein the sensor data comprises one or more of:
visual sensor data;
infrared sensor data;
microwave sensor data;
ultrasound sensor data;
audio sensor data;
position sensor data;
accelerometer sensor data; or
global positioning system data.

10. A method for modifying the data representative of virtual objects (102, 104, 106) stored according to the method of any one of claims 1 to 4, the method comprising:
obtaining a historic sensor data log from a sensor system comprising the physical properties, and respective changes over time, of real objects which correspond to variable elements (208) of the data representative of virtual objects (102, 104, 106); and
modifying the range of values (210) and/or probability functions (212) of the variable elements (208) based on historic data of the range of values (210) and/or probability functions (212) and the corresponding historic sensor data logs.

11. The method of claim 10, wherein modifying the range of values (210) and/or probability functions (212) is based on inputting the historic data and the corresponding historic sensor data logs to a machine learning algorithm trained to identify patterns between the historic data and historic sensor data logs and output a range of values (210) and/or a probability functions (212) for the corresponding variable elements.

12. The method of any one of claims 9 to 11, further comprising modifying the range of values (210) and/or the probability function (212) based on calculating the maximum a posteriori estimate of the historic sensor data log.

13. A computer program product comprising computer program code means which, when executed on a computing device having a processing system, cause the processing system to perform all of the steps of the method according to any of claims 1 to 12.

14. A processor configured to perform all of the steps of the method according to any of claims 1 to 12.

15. A system for displaying virtual objects (102, 104, 106), the system comprising:
the processor of claim 14;
a computer storage system configured to store the data representative of virtual objects (102, 104, 106);
a sensor system for obtaining sensor data representative of real objects; and
a display for displaying the virtual objects (102, 104, 106).
